# EUROPÄISCHE PATENTSCHRIFT

(11) **EP 3 414 141 B1**
(45) Veröffentlichungstag und Bekanntmachung des Hinweises auf die Patenterteilung: **02.12.2020**
(21) Anmeldenummer: 17708469.6
(22) Anmeldetag: 01.03.2017
(51) Int. Cl.: B61L 23/04

(54) **VERFAHREN UND SYSTEM ZUM ERKENNEN VON HINDERNISSEN IN EINEM GEFAHRRAUM VOR EINEM SCHIENENFAHRZEUG**
METHOD AND SYSTEM FOR IDENTIFYING OBSTACLES IN A DANGER ZONE IN FRONT OF A RAIL VEHICLE
PROCÉDÉ ET SYSTÈME DE DÉTECTION D'OBSTACLES DANS UNE ZONE DE DANGER DEVANT UN VÉHICULE FERROVIAIRE

(30) Priorität: 31.03.2016 DE 102016205339
(43) Veröffentlichungstag der Anmeldung: 19.12.2018
(73) Patentinhaber: Siemens Mobility GmbH, 81739 München (DE)
(72) Erfinder: BRABAND, Jens, 38106 Braunschweig (DE); EVERS, Bernhard, 38116 Braunschweig (DE)
(86) Internationale Anmeldenummer: PCT/EP2017/054759
(87) Internationale Veröffentlichungsnummer: WO 2017/167530

(56) Entgegenhaltungen:
- WO-A1-2010/122039
- WO-A1-2015/015494

## Beschreibung

Bekannt sind sowohl streckenseitige als auch fahrzeugseitige Hinderniserkennungsanordnungen, mittels derer in einem Gefahrraum vor einem Schienenfahrzeug Hindernisse erkannt werden können.

So offenbart die Druckschrift WO 2015/015494 A1 ein Verfahren und ein System zum Identifizieren von Hindernissen in der Nähe von Eisenbahnen und zum Bereitstellen eines Alarms für einen Betreiber eines Zuges, wenn Hindernisse eine Gefahr für den Zug darstellen. Das System umfasst dabei eine fahrzeugseitige Hinderniserkennungsanordnung, wobei ein IR-Sensor, welcher an der Vorderseite des Zuges in Fahrtrichtung angeordnet ist. Der IR-Sensor empfängt Bilder der Schienen vor dem Zug. Das System umfasst ein vorgespeichertes Vibrationsprofil des Zugmotors, das verwendet wird, um den Einfluss der Motorvibrationen auf die Genauigkeit der empfangenen Bilder zu eliminieren.

Weiterhin offenbart die Druckschrift WO 2010/122039 A1 ein Verfahren und eine Vorrichtung zur Übertragung von Videodaten an ein Fahrzeug. Dabei sind streckenseitig stationäre Videokameras zum Erfassen von Videodaten und zumindest eine stationäre Sendeeinrichtung zum funkbasierten Senden der erfassten Videodaten vorgesehen. Eine fahrzeugseitige Empfangseinrichtung dient zum funkbasierten Empfangen der auf zumindest einem ausgewählten Funkkanal gesendeten Videodaten zumindest einer er Videokameras.

Fahrzeugseitigen Hinderniserkennungsanordnungen mangelt es in der Regel an einer ausreichenden Vorausschau. Streckenseitigen Hinderniserkennungsanordnungen fehlt oft eine ausreichende Auflösung oder es mangelt ihnen an einer korrekten Klassifizierung eines jeweiligen Hindernisses. Unter anderem scheitert daran derzeit die Umsetzung eines autonomen Fahrens von Schienenfahrzeugen auf durch Mischverkehr geprägten Strecken, die von Güterzügen, und Hochgeschwindigkeitszügen befahren werden.

Die Erfindung betrifft ein Verfahren, bei dem eine streckenseitige Hinderniserkennungsanordnung und eine fahrzeugseitige Hinderniserkennungsanordnung verwendet werden, um Hindernisse in einem Gefahrraum vor einem Schienenfahrzeug zu erkennen.

Die Erfindung betrifft auch ein System, bei dem eine streckenseitige Hinderniserkennungsanordnung und eine fahrzeugseitige Hinderniserkennungsanordnung geeignet ausgebildet sind, Hindernisse in einem Gefahrraum vor einem Schienenfahrzeug zu erkennen.

Ein derartiges Verfahren und ein derartiges System sind aus der deutschen Patentanmeldung 102015212019.8 bekannt.

Der Erfindung liegt die Aufgabe zu Grunde, ein Verfahren und ein System gattungsgemäßer Art anzugeben, die ein verbessertes autonomes Fahren des Schienenfahrzeugs bzw. von Schienenfahrzeugen ermöglichen.

Gelöst wird diese Aufgabe durch ein Verfahren mit den Merkmalen des Patentanspruches 1, bei dem bei Annäherung an ein relevantes der Hindernisse zumindest eine Reaktion des Schienenfahrzeugs in Abhängigkeit eines Auswertesignals der streckenseitigen Hinderniserkennungsanordnung und eines Istwertes zumindest einer die Leistungsfähigkeit der fahrzeugseitigen Hinderniserkennungsanordnung charakterisierenden Größe abgeleitet wird, wobei anhand des streckenseitigen Auswertesignals eine streckenseitige Information über den Ort des Hindernisses bereitstellt wird und als Reaktion ein Steuersignal zur Anpassung eines Fahrverhaltens des Schienenfahrzeugs in Abhängigkeit der streckenseitigen Information über den Ort des Hindernisses bestimmt wird.

Gelöst wird diese Aufgabe in entsprechender Weise auch durch ein System mit den Merkmalen des Patentanspruches 11, welches geeignet ausgebildet ist, bei Annäherung an ein relevantes der Hindernisse zumindest eine Reaktion des Schienenfahrzeugs in Abhängigkeit eines Auswertesignals der streckenseitigen Hinderniserkennungsanordnung und eines Istwertes zumindest einer die Leistungsfähigkeit der fahrzeugseitigen Hinderniserkennungsanordnung charakterisierenden Größe abzuleiten, wobei die streckenseitige Hinderniserkennungsanordnung geeignet ausgebildet ist, anhand des streckenseitigen Auswertesignals eine streckenseitige Information über den Ort des Hindernisses bereitzustellen, und wobei eine Steuereinrichtung einer Fahrzeugsteueranordnung des Schienenfahrzeugs geeignet ausgebildet ist, als Reaktion ein Steuersignal zur Anpassung eines Fahrverhaltens des Schienenfahrzeugs in Abhängigkeit der streckenseitigen Information über den Ort des Hindernisses zu bestimmen.

Das erfindungsgemäße Verfahren und das erfindungsgemäße System bieten den Vorteil, dass sie ein optimiertes hybrides und dynamisches Zusammenwirken der streckenseitigen Hinderniserkennungsanordnung und der fahrzeugseitigen Hinderniserkennungsanordnung und damit ein autonomes Fahren von Schienenfahrzeugen mit optimaler Geschwindigkeit ermöglichen.

Das streckenseitige Auswertesignal kann aus einem das Hindernis anzeigenden streckenseitigen Hindernissignal gebildet werden und ein fahrzeugseitiges Auswertesignal kann aus einem das Hindernis anzeigenden fahrzeugseitigen Hindernissignal gebildet werden. Verfahrensgemäß ist es zur optimalen Umsetzung des hybriden und dynamischen Zusammenwirkens von streckenseitiger Hinderniserkennungsanordnung und fahrzeugseitiger Hinderniserkennungsanordnung von Vorteil, wenn das Steuersignal auch in Abhängigkeit des fahrzeugseitigen Auswertesignal gebildet wird.

Entsprechend ist es systemgemäß vorteilhaft, wenn die streckenseitige Hinderniserkennungsanordnung geeignet ausgebildet ist, das streckenseitige Auswertesignal aus einem das Hindernis anzeigenden streckenseitigen Hindernissignal zu bilden, wenn die fahrzeugseitige Hinderniserkennungsanordnung geeignet ausgebildet ist, ein fahrzeugseitiges Auswertesignal aus einem das Hindernis anzeigenden fahrzeugseitigen Hindernissignal zu bilden und wenn das System geeignet ausgebildet werden, das Steuersignal auch in Abhängigkeit des fahrzeugseitigen Auswertesignals zu bilden.

Bei dem erfindungsgemäßen Verfahren wird der Istwert bevorzugt in Abhängigkeit einer Information über die Art der fahrzeugseitigen Hinderniserkennungsanordnung bestimmt. Alternativ oder zusätzlich wird der Istwert und/oder ein Sollwert der zumindest einen die Leistungsfähigkeit der fahrzeugseitigen Hinderniserkennungsanordnung charakterisierenden Größe in Abhängigkeit einer Information über die am aktuellen Ort des Schienenfahrzeugs gegebene umweltbedingte Sichtweite bestimmt werden.

Außerdem wird es als vorteilhaft angesehen, wenn anhand des streckenseitigen Auswertesignals eine streckenseitige Information über den Typ des Hindernisses bereitstellt wird und wenn der Istwert und/oder das Steuersignal in Abhängigkeit der streckenseitigen Information über den Typ des Hindernisses bestimmt werden.

Vorzugsweise wird das streckenseitige Auswertesignal mittels einer streckenseitigen Übertragungsanordnung von einer Kommunikationseinheit der streckenseitigen Hinderniserkennungsanordnung zu einer Kommunikationseinheit des Schienenfahrzeugs übertragen. - Und entsprechend wird systemgemäß eine streckenseitige Übertragungsanordnung als vorteilhaft angesehen, die geeignet ausgebildet ist, das streckenseitige Auswertesignal von einer Kommunikationseinheit der streckenseitigen Hinderniserkennungsanordnung zu einer Kommunikationseinheit des Schienenfahrzeugs zu übertragen.

Verfahrensgemäß wird es ferner als vorteilhaft angesehen, wenn eine Fahrsteuereinrichtung des Schienenfahrzeugs das Steuersignal empfängt und das Fahrverhalten des Schienenfahrzeugs dem Steuersignal entsprechend anpasst. Entsprechend ist es systemgemäß vorteilhaft, wenn eine Fahrsteuereinrichtung des Schienenfahrzeugs geeignet ausgebildet ist, das Steuersignal zu empfangen und das Fahrverhaltens des Schienenfahrzeugs dem Steuersignal entsprechend anzupassen.

Die Erfindung ist im Weiteren anhand von Figuren näher erläutert. Dabei zeigen die
- Figur 1: ein Schienenfahrzeug auf einer Strecke und ein erfindungsgemäßes System zur Erkennung von Hindernissen in einem Gefahrraum der Strecke vor dem Schienenfahrzeug, und

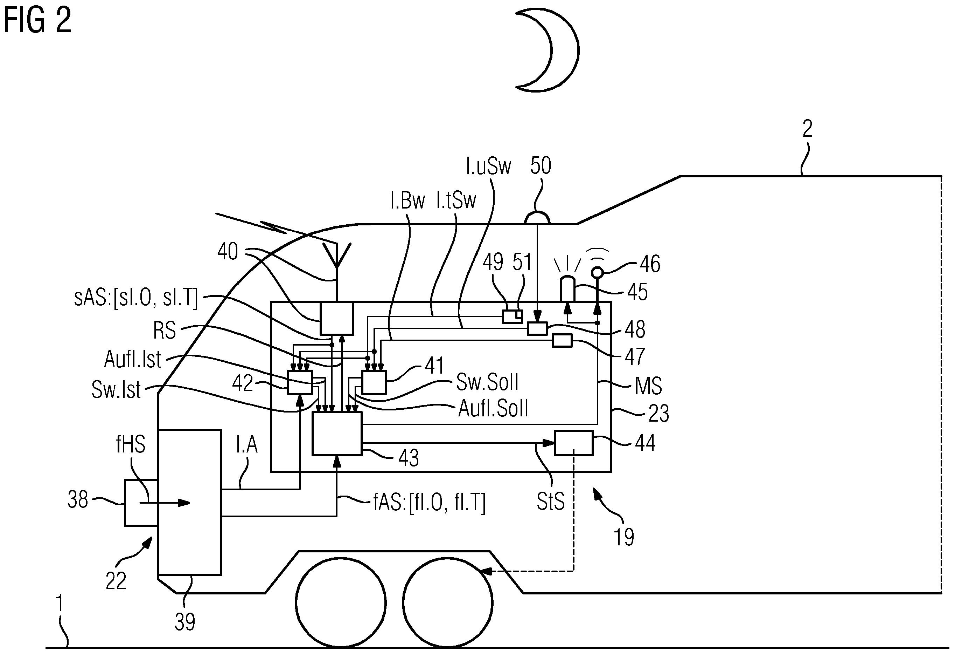

- Figur 2: das Schienenfahrzeug gemäß Figur 1.

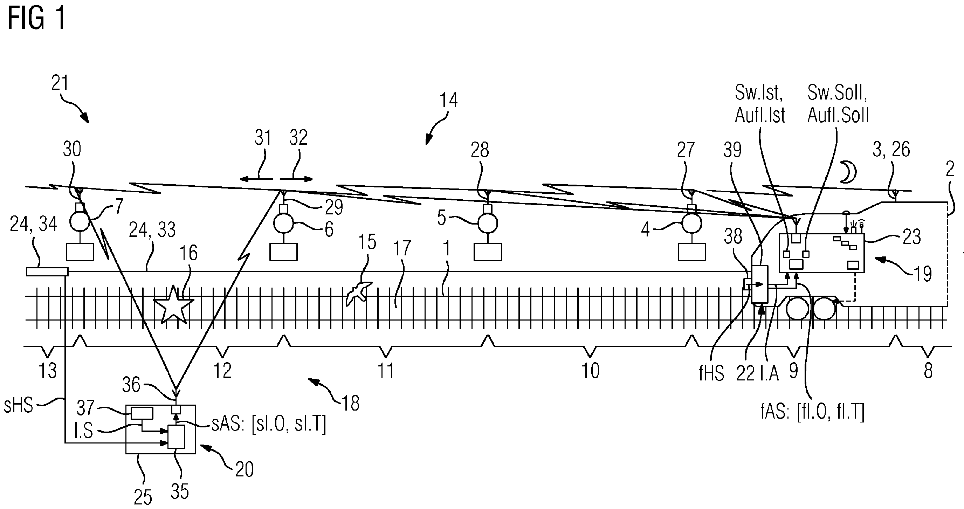

Die Figur 1 zeigt eine Strecke 1 mit einem Schienenfahrzeug 2, bei dem es sich insbesondere um ein automatisch ohne Triebfahrzeugführer fahrendes Schienenfahrzeug handelt.

Die Strecke 1 ist mit Signalen 3, 4, 5, 6, 7 - hier in Form von Lichtsignalen - ausgerüstet, wobei die Signale Streckenabschnitte 8, 9, 10, 11, 12, 13 der Strecke begrenzen.

Weiterhin zeigt die Figur 1 eine bevorzugte Ausführungsform 14 des erfindungsgemäßen Systems zum Erkennen von Hindernissen 15, 16 in einem Gefahrraum 17 der Strecke vor dem Schienenfahrzeug.

Das System 14 umfasst eine streckenseitige Ausrüstung 18 (Streckenausrüstung) und eine fahrzeugseitige Ausrüstung 19 (Fahrzeugausrüstung). Die Streckenausrüstung 18 umfasst eine streckenseitige Hinderniserkennungsanordnung 20 und eine streckenseitige Übertragungsanordnung 21. Die Fahrzeugausrüstung 19 umfasst eine fahrzeugseitige Hinderniserkennungsanordnung 22 und eine Fahrzeugsteueranordnung 23.

Die streckenseitige Hinderniserkennungsanordnung 20 ist eine die Strecke 1 kontinuierlich erfassende Anordnung zur Hinderniserkennung - sie weist eine streckenseitige Sensoreinrichtung 24 und eine streckenseitige Auswerteeinrichtung 25 auf.

Die streckenseitige Übertragungsanordnung 21 umfasst Kommunikationseinheiten 26, 27, 28, 29, 30 und ggf. hier nicht gezeigte Repeater.

Die Kommunikationseinheiten 26, 27, 28, 29, 30 sind an den Signalen 3, 4, 5, 6, 7 angebracht. Bei der gezeigten bevorzugten Ausführungsform 14 des erfindungsgemäßen Systems kommen aus der Car2XTechnologie bekannte Kommunikationseinheiten zum Einsatz, die im 5,9Ghz Bereich arbeiten. Die Kommunikationseinheiten 26, 27, 28, 29, 30 können in beide Richtungen 31, 32 der Strecke senden und empfangen. Das Senden und Empfangen kann rückwirkungsfrei erfolgen. Außerdem kann das Senden und Empfangen, beispielsweise durch Einspeisung des Signalstroms der Signale 3, 4, 5, 6, 7 oder eines von Solarmodulen erzeugten Stromes, energieautark erfolgen.

Dort, wo die direkte Verbindung zwischen den an den Signalen angebrachten Kommunikationseinheiten 26, 27, 28, 29, 30 nicht gegeben ist, werden Repeater aufgestellt oder andere Medien benutzt, so dass die Kommunikationseinheiten 26, 27, 28, 29, 30 zur Ausbildung der Übertragungsanordnung 21 signaltechnisch verbunden sind.

Bei der gezeigten Ausführungsform 14 des erfindungsgemäßen Systems kommt beispielhaft als streckenseitige Hinderniserkennungsanordnung 20 eine sogenannte "Fiber Optic Distributed Sensor Technique", insbesondere eine "Distributed Acoustic Sensor Technique" zum Einsatz. Alternativ oder zusätzlich sind aber auch andere streckenseitige Hinderniserkennungsanordnungen oder hybride Anordnungen aus verschiedenen streckenseitigen Hinderniserkennungsanordnungen einsetzbar.

Die Sensoreinrichtung 24 umfasst einen entlang der Strecke 1 in dem Gefahrraum 17 verlegten Glasfaserstrang 33 mit angeschlossener Sende- und Empfangseinheit 34. Von der Sende- und Empfangseinheit 34 empfangene Signale werden als streckenseitige Hindernissignale sHS an die Auswerteeinrichtung 25 übermittelt.

Die streckenseitige Auswerteeinrichtung 25 ist mit einer Auswerteeinheit 35, einer Kommunikationseinheit 36 sowie einer Streckenkarteneinheit 37 versehen, wobei die Streckenkarteneinheit 37 eine grobe Karte der Strecke besitzt.

In der Auswerteeinheit 35 werden die streckenseitigen Hindernissignale sHS mittels Filteralgorithmen ausgewertet.

Wenn durch die Auswerteeinheit 35 der streckenseitigen Hinderniserkennungsanordnung ein Hindernis (ein Ereignis) erkannt wird, so wird dieses durch die Auswerteeinheit 35 klassifiziert. Dabei wird per Mustererkennung der Typ des Hindernisses ermittelt. Je nach Typ werden unterschiedliche Reaktionen veranlasst. Außerdem wird unter Heranziehung von Informationen I.S hinsichtlich der Streckenabschnitte und der die Streckenabschnitte begrenzenden Signale, die die Auswerteeinheit 34 aus der Streckenkarteneinheit 36 ausliest, ein jeweiliges der Hindernisse (Ereignisse) dem betroffenen Streckenabschnitt zugeordnet. Bei Relevanz des jeweiligen Hindernisses (des Ereignisses) sendet die Auswerteeinheit 35 über die Kommunikationseinheit 36 ein streckenseitiges Auswertesignal sAS:[sI.O, sI.T] aus. Das Auswertesignal sAS:[sI.O, sI.T] wird an die Kommunikationseinheiten 29, 30 der streckenseitigen Kommunikationsanordnung gemeldet wird, welche an den Signalen 6, 7 angebracht sind, die den Streckenabschnitt 12 begrenzen, in dem das relevante Hindernis (Ereignis) 16 erkannt wurde.

Bezüglich des gezeigten Vogels 15 über dem Streckenabschnitt 12, den die streckenseitige Hinderniserkennungsanordnung als solchen erkennt, gibt die Auswerteeinheit 35 kein Auswertesignal aus, da es den Vogel als Hindernis eines nicht relevanten Typs klassifiziert. Hinsichtlich des mit 16 bezeichneten Hindernisses gibt die Auswerteeinheit das Auswertesignal sAS:[sI.O, sI.T] aus, da es dieses als Hindernis eines relevanten Typs klassifiziert.

Die an den Signalen angebrachten Kommunikationseinheiten 26, 27, 28, 29, 30 koordinieren sich untereinander, so dass die Kommunikationseinheit jedes der Signale die Ereignisse in beide Richtungen 31, 32 in ca. 3 km Entfernung kennt.

Die streckenseitige Sensoreinrichtung 24 erkennt also ein jeweiliges 15 bzw. 16 der Hindernisse 15, 16 und gibt ein das jeweilige Hindernis 15 bzw. 16 anzeigendes streckenseitiges Hindernissignal sHS an die Auswerteeinrichtung 25 aus. Und die Auswerteeinrichtung 25 bildet aus dem streckenseitigen Hindernissignal sHS das streckenseitiges Auswertesignal sAS:[sI.O, sI.T] und gibt dieses mittels seiner Kommunikationseinheit 36 zur Übertragung an das Schienenfahrzeug 2 an die streckenseitige Übertragungsanordnung 21 aus.

Dabei wird anhand des streckenseitigen Auswertesignals sAS:[sI.O, sI.T] eine streckenseitige Information sI.T über den Typ des relevanten Hindernisses 16 und eine streckenseitige Information sI.O über den Ort des relevanten Hindernisses 16 bereitstellt.

Das sich einem hier mit 4 bezeichneten Signal nähernde Schienenfahrzeug 2 empfängt die für das Schienenfahrzeug relevanten Informationen der nächsten drei Abschnitte 10, 11, 12. Bei Bedarf kann auch noch ein Ausschnitt aus der Streckenkarte mit übertragen werden. Genauso können Ereignisse zurückgenommen werden, die sich erledigt haben.

Die fahrzeugseitige Hinderniserkennungsanordnung 22 umfasst eine fahrzeugseitige Sensoreinrichtung 38 und eine fahrzeugseitige Auswerteeinrichtung 39.

Die Fahrzeugsteueranordnung 23 weist eine Kommunikationseinheit 40 auf, die geeignet ausgebildet ist, das streckenseitige Auswertesignal sAS:[sI.O, sI.T] von der streckenseitigen Übertragungsanordnung 21 zu empfangen.

Weiterhin weist die Fahrzeugsteueranordnung 23 eine Sollwertbestimmungseinrichtung 41, eine Istwertbestimmungseinrichtung 42 und eine Steuereinrichtung 43 auf.

Außerdem weist die Fahrzeugsteueranordnung 23 eine Fahrsteuereinrichtung 44 in Form einer Antriebs- und Bremssteuereinrichtung, eine Warneinrichtung 45 - hier in Form einer Hupe - und eine Alarmierungseinrichtung 46 - hier in Form eines Mittels zum Alarmieren von Wartungstrupps auf.

Darüber hinaus umfasst die Fahrzeugsteueranordnung 23 eine Einrichtung 47 zur Ausgabe einer Information I.Bw über den aktuellen Bremsweg des Schienenfahrzeugs, eine Einrichtung 48 zur Ausgabe einer Information I.uSw über die am aktuellen Ort des Schienenfahrzeugs gegebene umweltbedingte Sichtweite und eine Einrichtung 49 zur Ausgabe einer Information I.tSw über die am aktuellen Ort des Schienenfahrzeugs gegebene topologische Sichtweite. Die umweltbedingte Sichtweite kann beispielsweise durch Nebel oder Dunkelheit begrenzt sein. Die topologische Sichtweite kann beispielsweise durch Kurven oder Gefälle begrenzt sein.

Die Einrichtung 48 ist beispielsweise mit einem Helligkeitssensor 50 verbunden. Die Einrichtung 49 hat Zugriff auf einen Streckenatlas 51, der eine die Topologie der Strecke beschreibende Komponente umfasst.

Bei Annäherung an das Hindernis 16 werden Reaktionen des Schienenfahrzeugs 2 in Abhängigkeit des Auswertesignals sAS:[sI.O, sI.T] der streckenseitigen Hinderniserkennungsanordnung 20 und in Anhängigkeit zumindest eines der hier mit Sw.Ist und Aufl.Ist bezeichneten Istwerte, jeweils einer die Leistungsfähigkeit der fahrzeugseitigen Hinderniserkennungsanordnung 22 charakterisierenden Größe abgeleitet.

Eine der abgeleiteten Reaktionen besteht darin, dass die Steuereinrichtung 43 ein Steuersignal StS zur Anpassung eines Fahrverhaltens des Schienenfahrzeugs 2 bestimmt und dieses Steuersignal an die Fahrsteuereinrichtung 44 ausgibt, die dann das Fahrverhaltens des Schienenfahrzeugs dem Steuersignal StS entsprechend anpasst.

Eine weitere Reaktion besteht darin, dass die Steuereinrichtung 43 ein Meldesignal MS bestimmt und an die Warneinrichtung 45 sowie an die Alarmierungseinrichtung 46 ausgibt.

Die Steuereinrichtung 43 bildet das Steuersignal StS in Anhängigkeit einer Reihe von Werten und Informationen.

So wird zum automatischen Fahren ohne Triebfahrzeugführer an die Steuereinrichtung 43 neben dem zumindest einen Istwert Sw.Ist oder Aufl.Ist auch ein zugeordneter Sollwert Sw.Soll bzw. Aufl.Soll der zumindest einen die Leistungsfähigkeit der fahrzeugseitigen Hinderniserkennungsanordnung charakterisierenden Größe ausgegeben. Alternativ hierzu können auch beide Istwerte und beide Sollwerte an die Steuereinrichtung 43 ausgegeben werden.

Die Steuereinrichtung 43 bestimmt dann die Abweichung A.Sw=Sw.Ist-Sw.Soll und/oder die Abweichung A.Ausl=Ausl.Ist-Ausl.Soll des jeweiligen Istwertes von dem zugeordneten Sollwert, so dass die Reaktionen - also das Steuersignal StS und das Meldesignal MS - in Abhängigkeit des streckenseitigen Auswertesignals sAS:[sI.O, sI.T] und in Anhängigkeit von der ermittelten Abweichung A.Sw und/oder der ermittelten Abweichung A.Ausl abgeleitet werden.

Außerdem bestimmt die Steuereinrichtung 43 das Steuersignal StS auch in Abhängigkeit der streckenseitigen Information sI.T über den Typ des Hindernisses 16 und in Abhängigkeit der streckenseitigen Information sI.0 über den Ort des Hindernisses 16.

Darüber hinaus bildet die Steuereinrichtung 43 das Steuersignal StS auch in Abhängigkeit eines fahrzeugseitigen Auswertesignals fAS:[fI.O, fI.T]. Hierzu bildet die Sensoreinrichtung 38 der fahrzeugseitigen Hinderniserkennungsanordnung 22 - sobald sie das Hindernis 16 erkennt - ein das Hindernis 16 anzeigendes fahrzeugseitiges Hindernissignal fHS und gibt dieses an die Auswerteeinrichtung 39 aus. Die Auswerteeinrichtung 39 bildet ihrerseits aus dem fahrzeugseitigen Hindernissignal fHS das fahrzeugseitiges Auswertesignal fAS:[fI.O, fI.T und gibt dieses an die Steuereinrichtung 43 aus. Die fahrzeugseitige Auswerteeinrichtung 39 gibt auch eine Information I.A über die Art der Hinderniserkennungsanordnung 22 aus.

Als Istwert wird von der Istwertbestimmungseinrichtung 42 insbesondere ein der aktuell vorliegenden technischen Sichtweite (also ein der aktuell vorliegenden sensorischen Reichweite) der Hinderniserkennungsanordnung 22 entsprechender Wert Sw.Ist bestimmt und entsprechend wird von der Sollwertbestimmungseinrichtung 41 als Sollwert ein der aktuell erforderlichen technischen Sichtweitet zur Hinderniserkennung (also ein der aktuell erforderlichen sensorischen Reichweite zur Hinderniserkennung) entsprechender Wert Sw.Soll bereitgestellt.

Alternativ oder zusätzlich wird von der Istwertbestimmungseinrichtung als Istwert ein der der aktuell vorliegenden technische Auflösung der Hinderniserkennungsanordnung 22 entsprechenden Wert Aufl.Ist bestimmt und entsprechend wird von der Sollwertbestimmungseinrichtung 41 als Sollwert ein der aktuell erforderlichen technischen Auflösung zur Hinderniserkennung entsprechenden Wert Aufl.Soll bereitgestellt.

Insbesondere der Wert Sw.Ist der aktuell vorliegenden technischen Sichtweite wird von der Istwertbestimmungseinrichtung in Abhängigkeit der Information I.A über die Art der Hinderniserkennungseinrichtung 22, der streckenseitigen Information sI.T über den Typ des Hindernisses 16, der Information I.uSw über die am aktuellen Ort des Schienenfahrzeugs 2 gegebene umweltbedingte Sichtweite und der Information I.tSw über die am aktuellen Ort des Schienenfahrzeugs gegebenen topologischen Sichtweite bestimmt und an die Steuereinrichtung 43 ausgegeben.

Der Wert Sw.Soll der aktuell erforderlichen technischen Sichtweite wird von der Sollwertbestimmungseinrichtung vorzugsweise in Abhängigkeit der Information I.Bw über den aktuellen Bremsweg des Schienenfahrzeugs, der Information I.uSw über die am aktuellen Ort des Schienenfahrzeugs gegebene umweltbedingte Sichtweite und der Information I.tSw über die am aktuellen Ort des Schienenfahrzeugs gegebene topologische Sichtweite bestimmt und an die Steuereinrichtung 43 ausgegeben.

Der Wert Sw.Soll bildet dabei das aktuelle ortsbezogene Minimum der erforderlichen technischen Sichtweite zur Hinderniserkennung und wird als Vorgabe für die aktuell vorliegende technische Sichtweite der fahrzeugseitigen Hinderniserkennungsanordnung und deren Sensoreinrichtung (Sensorik, beispielsweise in Form eines Radarsystems, eines Kamerasystems, etc.) für die Streckenbeobachtung herangezogen.

Ist der Wert der aktuell vorliegenden technischen Sichtweite der Hinderniserkennungsanordnung 22 größer oder gleich dem aktuell erforderlichen Wert der technischen Sichtweite zur Hinderniserkennung (A.Sw≥0), so kann das Schienenfahrzeug 2 mit der maximal zulässigen Geschwindigkeit betrieben werden.

Ist der Wert der aktuell vorliegenden technischen Sichtweite der Hinderniserkennungsanordnung 22 kleiner als der aktuell erforderliche Wert der technischen Sichtweite zur Hinderniserkennung (A.Sw<0), so muss das Schienenfahrzeug 2 langsamer fahren. Mittels des Steuersignals StS erfolgt vorzugsweise durch eine dynamische Bremskurvenanpassung eine Begrenzung der Geschwindigkeit des Schienenfahrzeugs 2 derart, dass ein Halten vor dem Hindernis 16 möglich wäre.

Insbesondere aus der Ermittlung des Wertes Sw.Soll der aktuell erforderlichen technischen Sichtweite zur Hinderniserkennung basierend auf den oben genannten Informationen I.Bw, I.uSw, I.tSw als vorgegebenes Minimum für die technische Sichtweite (als vorgegebenes Minimum für die sensorische Reichweite) ergeben sich eine Reihe von Vorteilen.

So stellt der Wert Sw.Soll einen Maßstab für die erforderliche Sicherheit des Systems 14 und insbesondere seiner fahrzeugseitigen Hinderniserkennungsanordnung 22 und damit für deren Zulassungsfähigkeit für das automatische Fahren dar.

Die Systemverfügbarkeit beim automatischen Fahren ist erhöht, da eine dynamische Bremskurvenanpassung, basierend auf einer definierten Sicherheitsanforderung, auch bei schlechten Umgebungsbedingungen und bei die Sicht verschlechternden topologischen Bedingungen ein Fahren des Schienenfahrzeugs 2 ermöglicht - das Schienenfahrzeug muss nicht zwangsläufig angehalten werden.

Es besteht Rückwirkungsfreiheit zu bestehenden Zugbeeinflussungssystemen.

Der Wert Sw.Soll dient als Festlegung eines Designkriteriums für die Sensorik für das automatische Fahren.

Und das erfindungsgemäße Verfahren und das erfindungsgemäße System bieten den Vorteil, dass betriebliche und umweltbedingte Randbedingungen definiert werden können sowie deren Umsetzung durch die Ermittlung des Sollwertes als Vorgabe für die Leistungsfähigkeit der Hinderniserkennungsanordnung 22 bei der Streckenbeobachtung realisiert werden kann, wobei sich die Vorgabe dynamisch an die gegebenen Streckenverhältnissen anpasst und dabei mindestens so gut ist, wie die Leistungsfähigkeit eines Triebfahrzeugführers unter den gleichen Randbedingungen.

Die Hinderniserkennungsanordnung 22 des Schienenfahrzeugs 2 besitzt eine ihrer Art, den aktuellen Umweltbedingungen, den aktuellen topologischen Bedingungen und dem Typ eines jeweiligen Hindernisses entsprechende spezifische Leistungsfähigkeit hinsichtlich ihrer Sichtweite und auch eine spezifische Leistungsfähigkeit hinsichtlich ihrer Auflösung.

In jedem Fall passt das Schienenfahrzeug 2 in Abhängigkeit der Information sI.0 über den Ort des Hindernisses (und damit in Abhängigkeit von seiner Entfernung vom Hindernis), in Anhängigkeit der Information sI.T über den Typ des Hindernisses und in Abhängigkeit der Abweichung des Istwertes von dem Sollwert (und damit in Abhängigkeit von der aktuell vorliegenden Leistungsfähigkeit der fahrzeugseitigen Hinderniserkennungsanordnung 22 und der aktuell erforderlichen Leistungsfähigkeit zur Hinderniserkennung) sein Fahrverhalten dynamisch an, erkennt und klassifiziert das Hindernis 16 aus der Nähe und leitet die entsprechenden Reaktionen, z. B. Hupen oder Wartungstrupp alarmieren, ein. In den meisten Fällen wird das Hindernis z.B. ein großes Tier oder ein Mensch verschwunden sein oder lässt sich vertreiben. In diesem Fall meldet das Schienenfahrzeug 2 durch ein entsprechendes Rücksignal RS den geräumten Zustand zurück an die Kommunikationseinheit des nächsten Signals, das es passiert.

Während bei herkömmlichem Betrieb die Strecke nach Erkennen eines des Hindernisses gesperrt und geräumt werden müsste, ermöglicht das erfindungsgemäße System 14 ein autonomes Fahren des Schienenfahrzeugs 2 mit optimaler Geschwindigkeit.

## Patentansprüche

1. Verfahren, bei dem eine streckenseitige Hinderniserkennungsanordnung (20) und eine fahrzeugseitige Hinderniserkennungsanordnung (22) verwendet werden, um Hindernisse (15, 16) in einem Gefahrraum (17) vor einem Schienenfahrzeug (2) zu erkennen,
- bei dem bei Annäherung an ein relevantes (16) der Hindernisse zumindest eine Reaktion des Schienenfahrzeugs (2) in Abhängigkeit eines Auswertesignals (sAS:[sI.O, sI.T]) der streckenseitigen Hinderniserkennungsanordnung (20) und eines Istwertes (Sw.Ist, Aufl.Ist) zumindest einer die Leistungsfähigkeit der fahrzeugseitigen Hinderniserkennungsanordnung (22) charakterisierenden Größe abgeleitet wird,
- wobei anhand des streckenseitigen Auswertesignals (sAS:[sI.O, sI.T]) eine streckenseitige Information (sI.O) über den Ort des Hindernisses (17) bereitstellt wird und
- wobei als Reaktion ein Steuersignal (StS) zur Anpassung eines Fahrverhaltens des Schienenfahrzeugs (2) in Abhängigkeit der streckenseitigen Information (sI.O) über den Ort des Hindernisses (17) bestimmt wird.

2. Verfahren nach Anspruch 1,
**dadurch gekennzeichnet, dass**
als weitere Reaktion ein Meldesignal (MS) bestimmt wird.

3. Verfahren nach einem der Ansprüche 1 oder 2,
**dadurch gekennzeichnet, dass**
das streckenseitige Auswertesignal (sAS:[sI.O, sI.T]) aus einem das Hindernis (17) anzeigenden streckenseitigen Hindernissignal (sHS) gebildet wird.

4. Verfahren nach einem der Ansprüche 1 bis 3,
**dadurch gekennzeichnet, dass**
ein fahrzeugseitiges Auswertesignal (fAS:[fI.O, fI.T]) aus einem das Hindernis (17) anzeigenden fahrzeugseitigen Hindernissignal (fHS) gebildet wird.

5. Verfahren nach Anspruch 4,
**dadurch gekennzeichnet, dass**
das Steuersignal (StS) in Abhängigkeit des fahrzeugseitiges Auswertesignal (fAS:[fI.O, fI.T]) gebildet wird.

6. Verfahren nach einem der Ansprüche 1 bis 5,
**dadurch gekennzeichnet, dass**
der Istwert (Sw.Ist, Aufl.Ist) in Abhängigkeit einer Information (I.A) über die Art der fahrzeugseitigen Hinderniserkennungsanordnung (22) bestimmt wird.

7. Verfahren nach einem der Ansprüche 1 bis 6,
**dadurch gekennzeichnet, dass**
der Istwert (Sw.Ist, Aufl.Ist) und/oder ein Sollwert (Sw.Soll, Aufl.Soll) der zumindest einen die Leistungsfähigkeit der fahrzeugseitigen Hinderniserkennungsanordnung (22) charakterisierenden Größe in Abhängigkeit einer Information (I.uSw) über die am aktuellen Ort des Schienenfahrzeugs gegebene umweltbedingte Sichtweite bestimmt werden.

8. Verfahren nach einem der Ansprüche 1 bis 7,
**dadurch gekennzeichnet,**
- **dass** anhand des streckenseitigen Auswertesignals (sAS:[sI.O, sI.T]) eine streckenseitige Information (sI.T) über den Typ des Hindernisses (17) bereitstellt wird und
- **dass** der Istwert (Sw.Ist, Aufl.Ist) und/oder das Steuersignal (StS) in Abhängigkeit der streckenseitigen Information (sI.T) über den Typ des Hindernisses (17) bestimmt werden.

9. Verfahren nach einem der Ansprüche 1 bis 8,
**dadurch gekennzeichnet, dass**
das streckenseitige Auswertesignal (sAS:[sI.O, sI.T]) mittels einer streckenseitigen Übertragungsanordnung (21) von einer Kommunikationseinheit (36) der streckenseitigen Hinderniserkennungsanordnung (20) zu einer Kommunikationseinheit (40) des Schienenfahrzeugs (2) übertragen wird.

10. Verfahren nach einem der Ansprüche 1 bis 9,
dadurch **g**ekennzeichnet, dass
eine Fahrsteuereinrichtung (44) des Schienenfahrzeugs (2) das Steuersignal (StS) empfängt und das Fahrverhaltens des Schienenfahrzeugs (2) dem Steuersignal (StS) entsprechend anpasst.

11. System (14), bei dem eine streckenseitige Hinderniserkennungsanordnung (20) und eine fahrzeugseitige Hinderniserkennungsanordnung (22) geeignet ausgebildet sind, Hindernisse (15, 16) in einem Gefahrraum (17) vor einem Schienenfahrzeug (2) zu erkennen,
- wobei das System (14) geeignet ausgebildet ist, bei Annäherung an ein relevantes (16) der Hindernisse zumindest eine Reaktion des Schienenfahrzeugs (2) in Abhängigkeit eines Auswertesignals (sAS:[sI.O, sI.T]) der streckenseitigen Hinderniserkennungsanordnung (20) und eines Istwertes (Sw.Ist, Aufl.Ist) zumindest einer die Leistungsfähigkeit der fahrzeugseitigen Hinderniserkennungsanordnung (22) charakterisierenden Größe abzuleiten,
- wobei die streckenseitige Hinderniserkennungsanordnung (20) geeignet ausgebildet ist, anhand des streckenseitigen Auswertesignals (sAS:[sI.O, sI.T]) eine streckenseitige Information (sI.O) über den Ort des Hindernisses (17) bereitzustellen, und
- wobei eine Steuereinrichtung (43) einer Fahrzeugsteueranordnung (23) des Schienenfahrzeugs (2) geeignet ausgebildet ist, als Reaktion ein Steuersignal (StS) zur Anpassung eines Fahrverhaltens des Schienenfahrzeugs (2) in Abhängigkeit der streckenseitigen Information (sI.O) über den Ort des Hindernisses (17) zu bestimmen.

12. System (14) nach Anspruch 11,
**dadurch gekennzeichnet, dass** es geeignet ausgebildet ist, als weitere Reaktion ein Meldesignal (MS) zu bestimmen.

13. System (14) nach einem der Ansprüche 11 oder 12,
**dadurch gekennzeichnet, dass**
die streckenseitige Hinderniserkennungsanordnung (20) geeignet ausgebildet ist, das streckenseitige Auswertesignal (sAS:[sI.O, sI.T]) aus einem das Hindernis (16) anzeigenden streckenseitigen Hindernissignal (sHS) zu bilden.

14. System (14) nach einem der Ansprüche 11 bis 13,
**dadurch gekennzeichnet, dass**
die fahrzeugseitige Hinderniserkennungsanordnung (22) geeignet ausgebildet ist, ein fahrzeugseitiges Auswertesignal (fAS:[fI.O, fI.T]) aus einem das Hindernis (16) anzeigenden fahrzeugseitigen Hindernissignal (fHS) zu bilden.

15. System (14) nach Anspruch 14,
**dadurch gekennzeichnet, dass**
es geeignet ausgebildet ist, das Steuersignal (StS) in Abhängigkeit des fahrzeugseitiges Auswertesignal (fAS:[fI.O, fI.T]) zu bilden.

16. System (14) nach einem der Ansprüche 11 bis 15,
**gekennzeichnet durch**
eine streckenseitige Übertragungsanordnung (21), die geeignet ausgebildet ist, das streckenseitige Auswertesignal (sAS:[sI.O, sI.T]) von einer Kommunikationseinheit (36) der streckenseitigen Hinderniserkennungsanordnung (20) zu einer Kommunikationseinheit (40) des Schienenfahrzeugs (2) zu übertragen.

17. System (14) nach einem der Ansprüche 11 bis 16,
**dadurch gekennzeichnet, dass**
eine Fahrsteuereinrichtung (44) des Schienenfahrzeugs (2) geeignet ausgebildet ist, das Steuersignal (StS) zu empfangen und das Fahrverhalten des Schienenfahrzeugs (2) dem Steuersignal (StS) entsprechend anzupassen.

## Claims

1. Method in which a track-side obstacle identification arrangement (20) and a vehicle-side obstacle identification arrangement (22) are used in order to identify obstacles (15, 16) in a danger zone (17) in front of a rail vehicle (2),
- in which, on approaching a relevant item (16) of the obstacles, at least one reaction of the rail vehicle (2) is derived dependent upon an evaluation signal (sAS:[sI.O, sI.T]) of the track-side obstacle identification arrangement (20) and an actual value (Sw.Ist, Aufl.Ist) of at least one variable characterising the effectiveness of the vehicle-side obstacle identification arrangement (22),
- wherein, on the basis of the track-side evaluation signal (sAS:[sI.O, sI.T]), a track-side information item (sI.O) concerning the location of the obstacle (17) is provided and
- wherein, as a reaction, a control signal (StS) for adapting a driving behaviour of the rail vehicle (2) dependent upon the track-side information item (sI.O) concerning the location of the obstacle (17).

2. Method according to claim 1,
**characterised in that**
as a further reaction, a status signal (MS) is determined.

3. Method according to one of claims 1 or 2,
**c**haracterised in that
the track-side evaluation signal (sAS:[sI.O, sI.T]) is formed from a track-side obstacle signal (sHS) indicating the obstacle (17).

4. Method according to one of claims 1 to 3,
**characterised in that**
a vehicle-side evaluation signal (fAS:[fI.O, fI.T]) is formed from a vehicle-side obstacle signal (fHS) indicating the obstacle (17).

5. Method according to claim 4,
**characterised in that**
the control signal (StS) is formed dependent upon the vehicle-side evaluation signal (fAS:[fI.O, fI.T]).

6. Method according to one of claims 1 to 5,
**characterised in that**
the actual value (Sw.Ist, Aufl.Ist) is determined dependent upon an information item (I.A) concerning the type of the vehicle-side obstacle identification arrangement (22).

7. Method according to one of claims 1 to 6,
**characterised in that**
the actual value (Sw.Ist, Aufl.Ist) and/or a target value (Sw.Soll, Aufl.Soll) of the at least one variable characterising the effectiveness of the vehicle-side obstacle identification arrangement (22) are determined dependent upon an information item (I.uSw) concerning the environment-related visibility prevailing at the current location of the rail vehicle.

8. Method according to one of claims 1 to 7,
**characterised in that**
- on the basis of the track-side evaluation signal (sAS:[sI.O, sI.T]) a track-side information item (sI.T) concerning the type of the obstacle (17) is provided and
- **in that** the actual value (Sw.Ist, Aufl.Ist) and/or the control signal (StS) are determined, dependent upon the track-side information item (sI.T) concerning the type of the obstacle (17).

9. Method according to one of claims 1 to 8,
**characterised in that**
the track-side evaluation signal (sAS:[sI.O, sI.T]) is transferred by means of a track-side transfer arrangement (21) from a communication unit (36) of the track-side obstacle identification arrangement (20) to a communication unit (40) of the rail vehicle (2).

10. Method according to one of claims 1 to 9,
**characterised in that**
a driving control device (44) of the rail vehicle (2) receives the control signal (StS) and adapts the driving behaviour of the rail vehicle (2) according to the control signal (StS).

11. System (14) in which a track-side obstacle identification arrangement (20) and a vehicle-side obstacle identification arrangement (22) are suitably configured to identify obstacles (15, 16) in a danger zone (17) in front of a rail vehicle (2),
- wherein the system (14) is suitably configured, on approaching a relevant item (16) of the obstacles, to derive at least one reaction of the rail vehicle (2), dependent upon an evaluation signal (sAS:[sI.O, sI.T]) of the track-side obstacle identification arrangement (20) and an actual value (Sw.Ist, Aufl.Ist) of at least one variable characterising the effectiveness of the vehicle-side obstacle identification arrangement (22),
- wherein the track-side obstacle identification arrangement (20) is suitably configured, on the basis of the track-side evaluation signal (sAS:[sI.O, sI.T]), to provide a track-side information item (sI.O) concerning the location of the obstacle (17), and
- wherein a control device (43) of a vehicle control arrangement (23) of the rail vehicle (2) is suitably configured, as a reaction, to determine a control signal (StS) for adapting a driving behaviour of the rail vehicle (2) dependent upon the track-side information item (sI.O) concerning the location of the obstacle (17).

12. System (14) according to claim 11,
**characterised in that**
it is suitably configured, as a further reaction, to determine a status signal (MS).

13. System (14) according to one of claims 11 or 12,
**characterised in that**
the track-side obstacle identification arrangement (20) is suitably configured to form the track-side evaluation signal (sAS:[sI.O, sI.T]) from a track-side obstacle signal (sHS) indicating the obstacle (16).

14. System (14) according to one of claims 11 to 13,
**characterised in that**
the vehicle-side obstacle identification arrangement (22) is suitably configured to form a vehicle-side evaluation signal (fAS:[fI.O, fI.T]) from a vehicle-side obstacle signal (fHS) indicating the obstacle (16).

15. System (14) according to claim 14,
**characterised in that**
it is suitably configured to form the control signal (StS) dependent upon the vehicle-side evaluation signal (fAS: [fI.O, fI.T]).

16. System (14) according to one of claims 11 to 15,
**characterised by**
a track-side transfer arrangement (21) which is suitably configured to transfer the track-side evaluation signal (sAS:[sI.O, sI.T]) from a communication unit (36) of the track-side obstacle identification arrangement (20) to a communication unit (40) of the rail vehicle (2).

17. System (14) according to one of claims 11 to 16,
**characterised in that**
a driving control device (44) of the rail vehicle (2) is suitably configured to receive the control signal (StS) and to adapt the driving behaviour of the rail vehicle (2) according to the control signal (StS).

## Revendications

1. Procédé, dans lequel on utilise un système (20) de détection d'obstacles du côté de la voie et un système (22) de détection d'obstacles du côté du véhicule pour détecter des obstacles (15, 16) dans une zone (17) de danger devant un véhicule (2) ferroviaire, dans lequel
- à l'approche de l'un pertinent (16) des obstacles, on déduit une réaction du véhicule (2) ferroviaire en fonction d'un signal (sAS:[sI.O, sI.T]) d'exploitation du système (20) de détection d'obstacles du côté de la voie et d'une valeur (Sw.Ist, Aufl.Ist) réelle d'au moins une grandeur caractérisant la capacité du système (22) de détection d'obstacles du côté du véhicule,
- dans lequel, à l'aide du signal (sAS:[sI.O, sI.T]) d'exploitation du côté de la voie, on met à disposition une information (sI.O) du côté de la voie sur l'emplacement de l'obstacle (17), et
- dans lequel, comme réaction, on détermine un signal (StS) de commande pour l'adaptation d'un comportement de marche du véhicule (2) ferroviaire en fonction de l'information (sI.O) du côté de la voie sur l'emplacement de l'obstacle (17).

2. Procédé suivant la revendication 1,
**caractérisé en ce que**
l'on détermine, comme autre réaction, un signal (MS) d'alerte.

3. Procédé suivant l'une des revendications 1 ou 2,
**caractérisé en ce que**
l'on forme le signal (sAS: [sI.O, sI.T]) d'exploitation du côté de la voie à partir d'un signal (sHS) d'obstacle du côté de la voie indiquant l'obstacle (17).

4. Procédé suivant l'une des revendications 1 à 3,
**caractérisé en ce que**
l'on forme un signal (fAS: [fI.O, fI.T]) d'exploitation du côté du véhicule à partir d'un signal (fHS) d'obstacle du côté du véhicule indiquant l'obstacle (17).

5. Procédé suivant la revendication 4,
**caractérisé en ce que**
l'on forme le signal (sTS) de commande en fonction du signal (fAS:[fI.O, fI.T]) d'exploitation du côté du véhicule.

6. Procédé suivant l'une des revendications 1 à 5,
**caractérisé en ce que**
l'on détermine la valeur (Sw.Ist, Aufl.Ist) réelle en fonction d'une information (I.A) sur le type du système (22) de détection d'obstacles du côté du véhicule.

7. Procédé suivant l'une des revendications 1 à 6,
**caractérisé en ce que**
l'on détermine la valeur (Sw.Ist, Aufl.Ist) réelle et/ou une valeur (Sw.Soll, Aufl.Soll) de consigne de la au moins une grandeur caractérisant la capacité du système (22) de détection d'obstacles du côté du véhicule en fonction d'une information (I.uSw) sur la visibilité due à l'environnement donné à l'emplacement présent du véhicule ferroviaire.

8. Procédé suivant l'une des revendications 1 à 7,
**caractérisé**
- **en ce qu'**à l'aide du signal (sAS:[sI.O, sI.T]) d'exploitation du côté de la voie, on procure une information (sI.T) du côté de la voie sur le type de l'obstacle (17) et
- **en ce que** l'on détermine la valeur (Sw.Ist, Aufl.Ist) réelle et/ou le signal (StS) de commande en fonction de l'information (sI.T) du côté de la voie sur le type de l'obstacle (17).

9. Procédé suivant l'une des revendications 1 à 8,
**caractérisé en ce que**
l'on transmet le signal (sAS: [sI.O, sI.T]) d'exploitation du côté de la voie au moyen d'un système (21) de transmission du côté de la voie d'une unité (36) de communication du système (20) de détection d'obstacles du côté de la voie à une unité (40) de communication du véhicule (2) ferroviaire.

10. Procédé suivant l'une des revendications 1 à 9,
**caractérisé en ce qu'**
un dispositif (44) de commande de marche du véhicule (2) ferroviaire reçoit le signal (StS) de commande et adapte, en conséquence, les comportements de marche du véhicule (2) ferroviaire au signal (StS) de commande.

11. Système (14), dans lequel un système (20) de détection d'obstacle du côté de la voie et un système (22) de détection d'obstacles du côté du véhicule sont constitués d'une manière propre à détecter des obstacles (15, 16) dans une zone (17) de danger devant un véhicule (2) ferroviaire,
- dans lequel le système (14) est constitué de manière appropriée pour, à l'approche de l'un pertinent (16) des obstacles, déduire une réaction du véhicule (2) ferroviaire en fonction d'un signal (sAS:[sI.O, sI.T]) d'exploitation du système (20) de détection d'obstacles du côté de la voie et d'une valeur (Sw.Ist, Aufl.Ist) réelle d'au moins la grandeur caractérisant la capacité du système (22) de détection d'obstacles du côté du véhicule,
- dans lequel le système (20) de détection d'obstacles du côté de la voie est constitué de manière appropriée pour procurer, à l'aide du signal (sAS:[sI.O, sI.T]) d'exploitation du côté de la voie, un information (sI.O) du côté de la voie sur l'emplacement de l'obstacle (17), et
- dans lequel un dispositif (43) de commande d'un système (23) de commande du véhicule (2) ferroviaire est constitué de manière appropriée pour déterminer comme réaction un signal (StS) de commande pour l'adaptation d'un comportement de marche du véhicule (2) ferroviaire en fonction de l'information (sI.O) du côté de la voie sur l'emplacement de l'obstacle (17).

12. Système (14) suivant la revendication 11,
**caractérisé en ce qu'**
il est constitué de manière appropriée pour détermine comme autre réaction un signal (MS) d'alerte.

13. Système (14) suivant l'une des revendications 11 ou 12,
**caractérisé en ce que**
le système (20) de détection d'obstacles du côté de la voie est constitué de manière appropriée pour former le signal (sAS:[sI.O, sI.T]) d'exploitation du côté de la voie à partir d'un signal (sHS) d'obstacle du côté de la voie indiquant l'obstacle (16).

14. Système (14) suivant l'une des revendications 11 à 13,
**caractérisé en ce que**
le système (22) de détection d'obstacles du côté du véhicule est constitué de manière appropriée pour former un signal (fAS:[fI.O, fI.T]) d'exploitation du côté du véhicule à partir d'un signal (fHS) d'obstacle du côté du véhicule indiquant l'obstacle (16).

15. Système (14) suivant la revendication 14,
**caractérisé en ce qu'**
il est constitué de manière appropriée pour former le signal (StS) de commande en fonction du signal (fAS: [fI.O, fI.T]) d'exploitation du côté du véhicule.

16. Système (14) suivant l'une des revendications 11 à 15,
**caractérisé par**
un système (21) de transmission du côté de la voie, qui est constitué de manière appropriée pour transmettre le signal (sAS:[sI.O, sI.T]) d'exploitation du côté de la voie d'une unité (36) de communication du système (20) de détection d'obstacles du côté de la voie à une unité (40) de communication du véhicule (2) ferroviaire.

17. Système (14) suivant l'une des revendications 11 à 16,
**caractérisé en ce qu'**
un dispositif (44) de commande de marche du véhicule (2) ferroviaire est constitué d'une manière appropriée pour recevoir le signal (StS) de commande et pour adapter, en conséquence, le comportement de marche du véhicule (2) ferroviaire au signal (StS) de commande.
